# NEUE EUROPÄISCHE PATENTSCHRIFT

(11) **EP 1 125 772 B2**
(45) Veröffentlichungstag und Bekanntmachung des Hinweises auf die Entscheidung über den Einspruch: **10.12.2014**
(45) Hinweis auf die Patenterteilung: 13.09.2006
(21) Anmeldenummer: 01103043.4
(22) Anmeldetag: 09.02.2001
(51) Int. Cl.: B60C 25/05, B60S 5/04, B60C 25/135

(54) **Reifenfüllstation und Verfahren zur Reifenfüllung**
Tyre inflation station and method to inflate tyres
Station de gonflage de pneumatiques et méthode de gonflage de pneumatiques

(30) Priorität: 16.02.2000 DE 10007019
(43) Veröffentlichungstag der Anmeldung: 22.08.2001
(73) Patentinhaber: Schenck RoTec GmbH, 64293 Darmstadt (DE)
(72) Erfinder: Ronge, Heinz, 64367 Mühltal (DE); Rogalla, Martin, 64297 Darmstadt (DE); Lipponer, Georg, 64673 Zwingenberg (DE)
(74) Vertreter: Haar, Lucas Heinz Jörn

(56) Entgegenhaltungen:
- EP-B1- 1 110 765
- WO-A-98/34802
- DE-A- 19 801 455
- US-A- 4 947 919
- US-A- 5 035 274

## Beschreibung

Die Erfindung bezieht sich auf eine Reifenfüllstation, der aus einer Radfelge und einem auf die Radfelge montierten Reifen bestehende Rad/Reifenanordnungen über eine Transporteinrichtung zuführbar sind, mit einer Reifenfüllglocke, die mit einer Seitenfläche des Reifens zusammenwirkt, mit einer mit der gegenüberliegenden Seitenfläche der Rad/Reifenanordnung zusammenwirkenden Dichtfläche einer Lager- und Dichteinrichtung und mit einer Einrichtung mittels der Rad/Reifenanordnung und Transporteinrichtung quer zur Transportebene relativ zueinander bewegbar sind.

Bei der Serienfertigung von Kraftfahrzeugen werden Radfelgen und Reifen von unterschiedlichen Lagerstellen mittels geeigneter Fördereinrichtungen einer Reifenmontagestraße zugeführt, bei der der Reifen auf der Radfelge montiert und danach der gewünschte Reifendruck mittels Druckluftfüllung hergestellt wird. Anschließend wird das so fertiggestellte Rad z.B. auf Laufeigenschaften oder Unwuchten geprüft und in der Regel noch ausgewuchtet. Das fertige Rad wird nun von der Reifenmontagestraße der Montagelinie für das Komplettfahrzeug zugeführt.

Eine Reifenfüllstation der eingangs genannten Art ist aus der US-PS 4,947,919 bekannt. Das Reifenmontier- und füllsystem nach dieser Veröffentlichung weist im wesentlichen eine Montagestation, eine Fördereinrichtung und eine Reifenfüllstation auf. In der Montagestation wird der Reifen auf die Radfelge montiert und in drucklosem Zustand über die Fördereinrichtung der Reifenfüllstation zugeführt. Die Fördereinrichtung besteht aus zwei Ketten, auf denen die Rad/Reifenanordnung mit den Reifenseitenflächen aufliegt. In der Reifenfüllstation wird die Fördereinrichtung abgesenkt, so daß die Rad/Reifenanordnung mit Seitenflächen auf einer Auflageplatte aufliegt. Oberhalb der anderen gemäß Fig. 5 oberen Seite der Rad/Reifenanordnung ist eine Reifenfüllglocke angeordnet, die zum Reifenfüllvorgang abgesenkt wird und mit ihrem Rand die Reifenseitenwand von der Felge wegdrückt, so daß ein ringförmiger Raum zwischen Reifenseitenwand und Radfelge entsteht, über den die Druckluftfüllung des Reifens erfolgt. Die Druckluft strömt von der in der Auflageplatte angeordneten Druckluftquelle über den abgedichteten Felgeninnenraum in die Füllglocke und von dort über den Ringraum ins Reifeninnere und bewegt schließlich die Reifenseitenwand unter Schließung des Ringraumes in Anlagen an die Felge. Diese bekannte Reifenfüllstation ist für Reifenmontagestraßen nicht geeignet, auf denen Räder stark unterschiedlicher Reifen-und/oder Felgengrößen montiert werden sollen, da durch den durch die Fördereinrichtung begrenzten Durchmesser der Auflageplatte bzw. durch den Durchmesser der Füllglocke Felgen- oder Reifen größerer Durchmesser nicht ohne weiteres montiert bzw. gefüllt werden können.

Es ist weiterhin aus WO-A-9834802 eine gattungsgemäße Reifenfüllstation bekannt, bei der die Rad/Reifenanordnung auf einer Platte mit einer im wesentlichen ebenen und luftundurchlässigen Oberfläche gelagert ist. Diese obere Platte ist Teil einer aus mehreren Platten zusammengesetzten Lagerung, die ein nahezu reibungsfreies, horizontales Schwimmen der oberen Platte bewirken soll, damit die Rad/Reifenanordnung mittels einer Zentriereinrichtung in der Füllstation zentriert werden kann. Der Füllkopf weist bei dieser Reifenfüllstation zwei konzentrische Dichtringe auf, von denen einer mit der Seitenfläche des Reifens und der andere mit dem Rand der Felge zusammenwirkt und zwischen denen eine Ringkammer gebildet ist, die in bekannter Weise mit Druckluft beaufschlagt wird.

Es ist weiterhin aus DE-A-198 01 455 eine Füllglocke zum Füllen von Autorädern mit Luft bekannt, die mehrere Reifendichtringe aufweist, die je nach Reifengröße automatisch in Funktion gesetzt werden können. Die Reifendichtringe sind jeweils zwischen Führungsringen gelagert, die an einer Tragplatte befestigt sind, und werden von doppelt wirkenden Zylindern relativ zur Tragplatte verstellt. An der Tragplatte ist ferner ein Verstellmechanismus angebracht, der einen Felgendichtring trägt, wobei der Felgendichtring auf den jeweils geforderten Durchmesser eingestellt werden kann. Die Trägerplatte trägt ferner separate Luftzuführungen für die einzelnen Reifendichtringe.

Der Erfindung liegt daher die Aufgabe zugrunde, eine Einrichtung sowie ein Verfahren zur Reifenfüllung zu schaffen, welche für unterschiedlichste Radmodelle bzw. Radgrößen auch im Mixbetrieb in automatisierten Anlagen verwendbar sind.

Diese Aufgabe wird erfindungsgemäß mit den Merkmalen der Patentansprüche 1 und 14 gelöst. Der Erfindung liegt die Erkenntnis zugrunde, daß der Anwendungsbereich von Reifenfülleinrichtungen dadurch zu erweitern ist, daß bei dichtringlosen Fülleinrichtungen die Abmessungen der Lager- und Dichtfläche für die Rad/Reifenanordnung bzw. die Füllglockenabmessungen unabhängig von den Abmessungen der Transporteinrichtung gewählt werden können. Hierzu ist erfindungsgemäß vorgesehen, die Dichtfläche und/oder die Füllglocke mehrteilig zu gestalten, so daß diese im Durchmesser unabhängig von Ausgestaltung und Abmessung der Transporteinrichtung werden. Beim dichtringlosen Reifenfüllen ergibt sich auch in Hinblick auf bekannte Paletten-Transportsysteme, bei der jeder Rad/Reifenanordnung eine eigene Transportpalette zugeordnet ist, eine gravierende Kosten- und Taktzeitersparnis.

In einer vorteilhaften Ausgestaltung der Erfindung ist vorgesehen, daß die Transporteinrichtung zwei beiderseits der Radmitte angeordnete Transportmittel zur Abstützung der Rad/Reifenanordnung aufweist und daß die Auflageplatte zumindest ein zentrales, zwischen den Transportmitteln angeordnetes Teil aufweist sowie zumindest ein Teil, das seitlich an das zentrale Teil dichtend anlegbar ist. Diese Ausgestaltung ist konstruktiv einfach und kostengünstig herstellbar.

Ein kompakte Ausgestaltung der Erfindung ergibt sich dadurch, daß das seitlich anlegbare Teil aus einer Stellung zwischen den Transportmitteln in die Anlagestellung bewegbar ist, da hier die Verschiebung bzw. Verschwenkung quer zur Transportrichtung von innen nach außen erfolgt.

Eine erfindungsgemäße Ausgestaltung, bei der vorzugsweise zwei weitere Teile seitlich neben den Transportmitteln angeordnet sind und quer zur Transportrichtung in die Anlagestellung bewegbar sind, hat den Vorteil, daß nur zwei Dichtfugen zwischen den Teilen der Lager- und Dichteinrichtung vorhanden sind und ein einfacher Verschiebevorgang in einer Ebene erfolgt.

Eine Weiterbildung der Erfindung, bei der auch die gegen das zentrale Teil dichtend anliegenden Teile an einem das zentrale Teil abstützenden Gestellelement der Reifenfüllstation abgestützt sind hat den Vorteil, daß nach Verschieben der Teile in lastfreiem Zustand, das ohne aufwendige Führungselemente erfolgt, die beim Füllvorgang unter Krafteinwirkung stehenden Teile an einer stabilen Stützstruktur abgestützt sind. Dies ermöglicht eine leichtere Bauweise.

In einer weiteren vorteilhaften Ausgestaltung der Erfindung ist vorgesehen, daß die Reifenfüllringe konzentrisch angeordnet und gegeneinander in Achsrichtung verschiebbar sind. Eine derartige Anordnung ermöglicht eine ineinander geschachtelte Bauweise der Füllringe und damit eine kompakte Ausführung mit einem weiten Arbeitsbereich.

Weitere vorteilhafte Ausgestaltungen der Erfindung sind Gegenstand von Unteransprüchen.

Ausführungsformen der Erfindung sind in der Zeichnung dargestellt und werden im folgenden näher erläutert. Es zeigen:
- Fig. 1: eine schematisierte Schnittdarstellung der erfindungsgemäßen Reifenfüllstation,
- Fig. 2: eine weitere schematisierte Schnittdarstellung der erfindungsgemäßen Reifenfüllstation mit einer Rad/Reifenanordnung unterschiedlicher Größe
- Fig. 3: eine andere Ausführungsform der erfindungsgemäßen Reifenfüllstation in schematisierter Schnittdarstellung.
- Fig. 4: eine Weiterbildung der in Fig. 2 dargestellten Reifenfüllstation

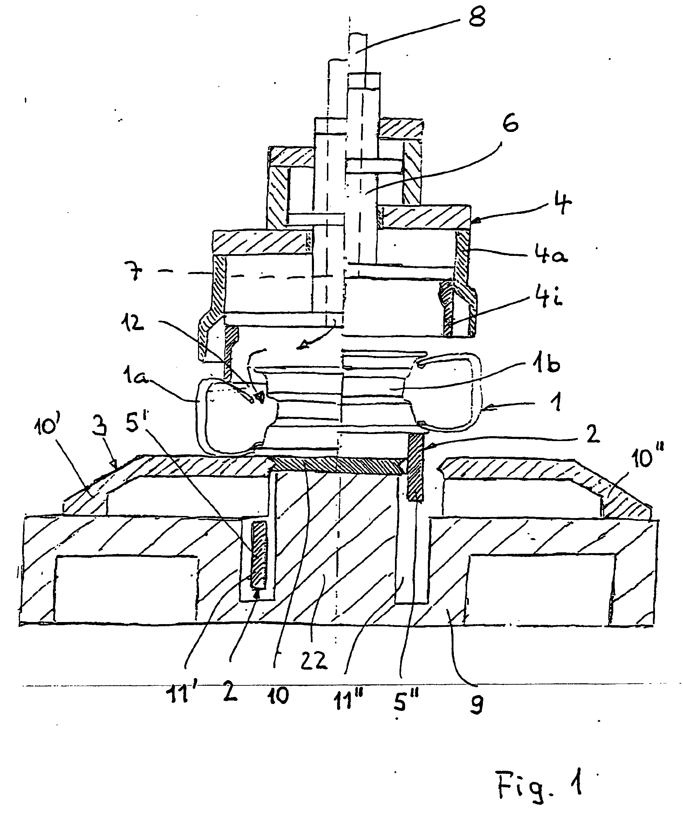

Der in Fig. 1 dargestellten Reifenfüllstation wird eine Rad-/Reifenanordnung 1 über eine Transporteinrichtung 2 zugeführt und auf einer Lager- und Dichteinrichtung 3 gelagert. Der Reifenfüllvorgang erfolgt als Druckluftfüllung über die mit 4 bezeichnete Reifenfüllglocke. Der Reifenfüllstation vorgeschaltet ist eine Reifenmontierstation, in der der Reifen 1a in bekannter Weise auf die Radfelge 1b aufgebracht wird und danach als Rad/Reifenanordnung 1 in drucklosem Zustand zur Reifenfüllstation transportiert und nach dem Aufblasen von dort weitertransportiert wird. Die Stationen können als einzelne Module jeweils ein Maschinengestell aufweisen, es kann jedoch auch ein gemeinsames Maschinengestell für verschiedene Stationen vorgesehen sein.

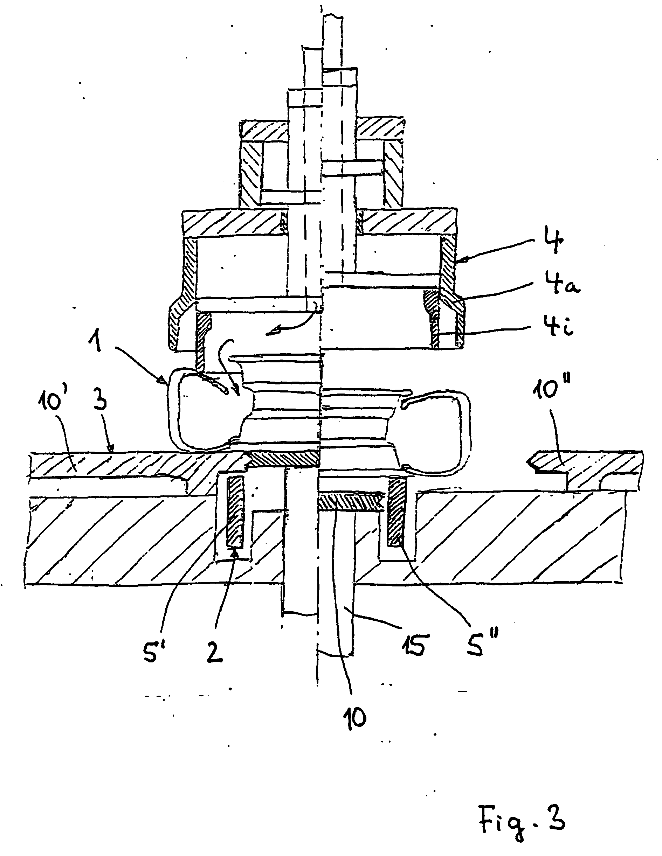

Die Reifenfüllstation ist in der Fig. 1 und auch in der Fig. 3 jeweils als Halbschnitt in zwei verschiedenen Arbeitsphasen dargestellt. In der rechten Hälfte der Darstellung ist jeweils die Transportphase dargestellt, während in der linken Hälfte der Darstellung die Reifenfüll- bzw. Aufblasphase dargestellt ist.

Die Transporteinrichtung weist zwei in der horizontalen Transportebene verlaufende zueinander beabstandete Transportmittel 5', 5" auf, die z.B. als Transportketten oder -riemen ausgebildet und an dem Maschinengestell 9 gelagert sind. Die Transportmittel 5', 5" verlaufen beiderseits der Drehachse der Rad/Reifenanordnung 1, wobei diese Achse vertikal zur Transportebene verläuft. Das heißt mit anderen Worten, daß die Rad/Reifenanordnung 1 liegend transportiert und behandelt wird.

In der Transportphase liegt die Rad/Reifenanordnung 1 mit diametral gegenüberliegenden Felgenseitenflächen auf den beiden Transportmitteln 5', 5" auf. Es kann auch vorgesehen werden, daß die Rad/Reifenanordnung 1 mit diametral gegenüberliegenden Reifenseitenflächen auf den beiden Transportmitteln 5', 5" aufliegt. In einem Hubschrittverfahren wird die Rad/Reifenanordnung 1 in angehobenem Zusand in die Reifenfüllstation transportiert bis sie zentrisch unter der Reifenfüllglocke 4 liegt und dann durch Absenken der Transporteinrichtung 2 auf den zentralen plattenförmigen Teil 10 der Lager- und Dichteinrichtung 3 aufgebracht. Der zentrale plattenförmige Teil 10 ist auf einem säulenförmigen Teil 22 des Maschinengestells 9 abgestützt. Die Transporteinrichtung 2 bzw. die beiden Transportmittel 5', 5" werden bis zum vollständigen Eintauchen in Aufnahmeräume 11', 11" des Maschinengestells 9 abgesenkt.

Die Lager- und Dichteinrichtung 3 ist mehrteilig aufgebaut und weist den zentralen plattenförmigen Teil 10 auf, der sich am Maschinengestell 9 abstützt und dessen Erstreckung in Transportrichtung größer ist als der Durchmesser der Auflagefläche der größten zu füllenden Rad/Reifenanordnung 1. Hierdurch ist eine stabile Lagerung der Rad/Reifenanordnung 1 auf dem zentalen Teil 10 gegeben. Die Lager- und Dichteinrichtung 3 weist zwei weitere plattenförmige Teile 10', 10" auf, die während der Transportphase zu beiden Seite der Bewegungsbahn der Transporteinrichtung 2 angeordnet sind, wie dies aus der rechten Hälfte der Fig. 1 ersichtlich ist. Nach dem Absenken der Transporteinrichtung 2 werden diese beiden seitlichen Teile 10', 10" in der Lagerebene quer zur Transportrichtung auf dem Maschinengestell 9 über die abgesenkten Transportmittel 5', 5" hinweg aufeinander zu bis zur jeweiligen Anlage am zentralen Teil 10 verschoben; diese Stellung ist aus der linken Hälfte der Fig. 1 ersichtlich. Die aneinander liegenden Teile 10, 10', 10" der Lager- und Dichteinrichtung 3 sind mit Dichtvorrichtungen versehen, in der dargestellten Ausführungsform in Form von einander zugeordneten Vorsprüngen und Vertiefungen. Es können jedoch auch elastische Dichtvorrichtungen wie Dichtschnüre oder dergleichen verwendet werden, die in Nuten der Teile 10, 10', 10" angeordnet sind. Die beiden seitlichen Teile 10', 10" sind wie das zentrale Teil 10 in der Draufsicht rechteckförmig und haben die gleiche Erstreckung längs der Transportrichtung wie das zentrale Teil 10. Es kann jedoch auch vorgesehen werden, die Lager- und Dichteinrichtung 3 in Draufsicht als Kreisfläche auszubilden; die beiden seitlichen Teile 10', 10" sind dann in Draufsicht kreisabschnittsförmig. Die Erstreckung der Lager- und Dichteinrichtung 3 in der Lagerebene quer zur Transportrichtung ist größer als der Durchmesser der Auflagefläche der größten zu füllenden Rad/Reifenanordnung. Es liegt im Rahmen der Erfindung, auch nur ein seitliches Teil vorzusehen und das zentrale Teil 10 in der Lagerebene verschiebbar zu gestalten. Das seitliche Teil wird bis zur Anlage an das zentrale Teil 10 quer zur Transportrichtung verschoben und dann mit diesem gemeinsam weiter verschoben bis die Trennfuge mittig zwischen den Transportmitteln 5', 5" liegt.

Nicht dargestellt ist eine Ausgestaltung, bei der anstelle seitlicher Teile 10', 10" zentral zwischen den Transportmitteln 5', 5" liegende Teile vorgesehen sind, die dann seitlich nach außen verschoben werden und zur Ausbildung einer ebenen Dichtfläche in die Lager- und Dichtebene bewegt werden. Auch eine Schwenkbewegung der Teile aus dem zentralen Bereich heraus liegt im Rahmen der Erfindung.

Die in Fig. 1 dargestellte Reifenfüllglocke ist mehrteilig ausgebildet und weist im dargestellten Ausführungsbeispiel zwei axial zueinander verschiebliche Reifenfüllringe 4a, 4i unterschiedlichen Durchmessers auf, die jeweils mit ihrem Rand zur Reifenfüllung in Anlage an die Reifenseitenwand gebracht werden und diese Reifenseitenwand von der Felge 1b wegdrücken, so daß ein ringförmiger Raum 12 zwischen Reifen 1a und Radfelge 1b entsteht, über den die Druckluftfüllung des Reifens erfolgt. Die Reifenfüllglocke 4 ist dazu insgesamt, d.h. mit ihren beiden Reifenfüllringen 4a, 4i relativ zur Rad/Reifenanordnung 1 beispielsweise fluidbetätigt bewegbar. Im dargestellten Ausführungsbeispiel ist die Reifenfüllglocke 4 aus ihrer Stellung während der Transportphase (rechte Hälfte der Darstellung), in der die Ränder der beiden Reifenfüllringe 4a, 4i etwa auf gleicher Höhe sind, in die Reifenfüllstellung abgesenkt (linke Hälfte der Darstellung), wobei zusätzlich noch der innere Reifenfüllring 4i gegenüber dem äußeren Reifenfüllring 4a zur Rad/Reifenanordnung 1 hin verschoben ist. Hierzu ist der innere Reifenfüllring 4i mit einem Kolben 6 verbunden, der fluidbetätigt verschiebbar ist. Der äußere Reifenfüllring 4a ist mit einem konzentrisch zu ihm angeordneten Gehäuse verbunden, in dem der Kolben 6 fluidbetätigt verschiebbar ist. Über eine zentrale Bohrung 7 in diesem Kolben 6 wird die von einer Druckluftquelle, beispielsweise einem Druckluftbehälter über eine Leitung 8 herangeführte Druckluft dem Innenraum der Reifenfüllglocke 4 zugeführt, wie dies durch die Pfeile in der Darstellung angedeutet ist. Es kann jedoch die Druckluftzuführung in den Innenraum der Reifenfüllglocke 4 auch durch Druckluftzufuhr von unten durch die Dichtfläche oder seitlich an der Füllglocke erfolgen.

In der linken Hälfte der Fig. 1 ist die Reifenfüllposition dargestellt; die Rad/Reifenanordnung 1 liegt auf der aus ihren Teilen 10, 10', 10" zusammengesetzten Lager- und Dichteinrichtung 3 auf, wobei die Reifenseitenwand den Innenraum abdichtend auf der aus den Teilen 10, 10', 10" zusammengesetzten Dichtfläche aufliegt. Der Rand des inneren Reifenfüllrings 4i hat die Reifenseitenwand abgehoben. Über die zentrale Bohrung 7 erfolgt die Druckluftfüllung, wobei der Innenraum der Reifenfüllglokke 4, der Reifeninnenraum und die Dichtfläche aus den Teilen 10, 10', 10" der Lager- und Dichteinrichtung 3 einen gegenüber der Umgebung abgeschlossenen Raum definieren. Im Verlauf des Füllvorgangs wird durch den Druckaufbau auch die obere Reifenseitenwand gegen die vom inneren Reifenfüllring 4i ausgeübte Kraft unter Verschiebung des inneren Reifenfüllrings 4i nach oben gegen das Felgenhorn gepreßt. Die Reifenfüllglocke 4 fährt anschließend in ihre während des Transports der Rad/Reifenanordnung 1 vorgesehene Stellung, die seitlichen Teile 10', 10" der Lager- und Dichteinrichtung 3 werden auseinandergefahren, die Transporteinrichtung 2 angehoben und das gefüllte Rad, das auf den Transportmitteln 5', 5" aufliegt, weiter transportiert. Es liegt im Rahmen der Erfindung, die Reifenfüllstation mit der erfindungsgemäßen mehrteiligen Reifenfüllglocke als Einzelmaschine auszubilden, der die Rad/Reifenanordnungen manuell statt mittels einer Transporteinrichtung zugeführt und entnommen werden.

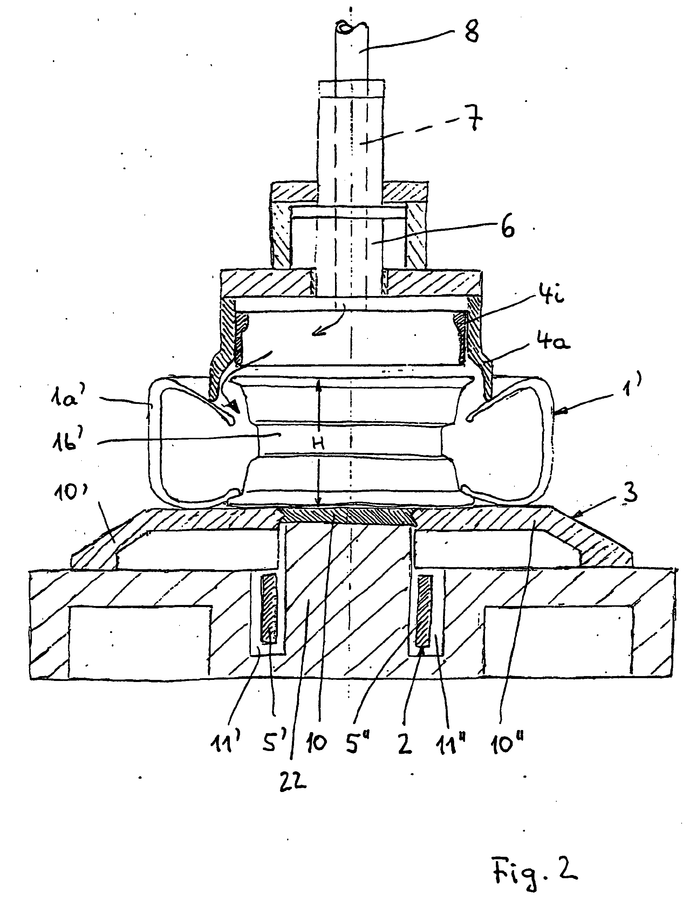

Die in Fig. 2 dargestellte Reifenfüllstation entspricht der in Fig. 1 dargestellten Reifenfüllstation. Anstelle der in Fig. 1 dargestellten Rad/Reifenanordnung 1 ist hier jedoch eine Rad/Reifenanordnung 1' mit deutlich größeren Abmessungen zur Füllung vorgesehen, beispielsweise die eines 18" Rades anstelle einer Rad/Reifenanordnung eines 13" Rades wie in Fig. 1. Dargestellt ist die Reifenfüllposition, in der der wegen der größeren Reifenabmessungen eingesetzte äußere Reifenfüllring 4a größeren Durchmessers die Seitenfläche des Reifens 1a' unter Bildung eines Ringspalts von der Felge 1b' weggedrückt hat. Wegen der größeren Felgenbreite H ist der innere Reifenfüllring 4i, der bei diesen Abmessungen zur Füllung nicht eingesetzt wird, mittels Fluidbetätigung des Kolbens 6 soweit wie erforderlich in den Innenraum des äußeren Reifenfüllrings 4a eingezogen; er liegt somit nicht an der Rad/Reifenanordnung 1' an und ermöglicht eine ungehinderte Druckluftzufuhr von der zentralen Bohrung 7 im Kolben 6 ins Reifeninnere. Aus der Fig. 2 ist ersichtlich, daß die Lager- und Dichteinrichtung 3 aus den Teilen 10, 10' und 10" so bemessen ist, daß auch die Reifen 1a' großer 18" Räder dichtend auf der Fläche der Lager- und Dichteinrichtung 3 aufliegen.

In der Fig. 3 ist eine Ausführungsform der Erfindung in zwei Halbschnitten dargestellt, bei der die Transporteinrichtung 2 zwecks Lagerung der Rad/Reifenanordnung 1 zum Füllvorgang nicht abgesenkt wird. Mittels eines Hubkolbens 15, an dessen Ende das zentrale Teil 10 der Lager- und Dichteinrichtung 3 angeordnet ist, wird die Rad/Reifenanordnung 1 angehoben bis die beiden plattenförmigen Teile 10', 10" der Lager- und Dichteinrichtung 3 über die Bewegungsbahnen der Transportmittel 5', 5" in Anlage an den zentralen Teil 10 wegbewegt werden können. In Aufbau und Funktionsweise entspricht die Ausführungsform nach der Fig. 3 ansonsten der Reifenfüllstation nach Fig. 1.

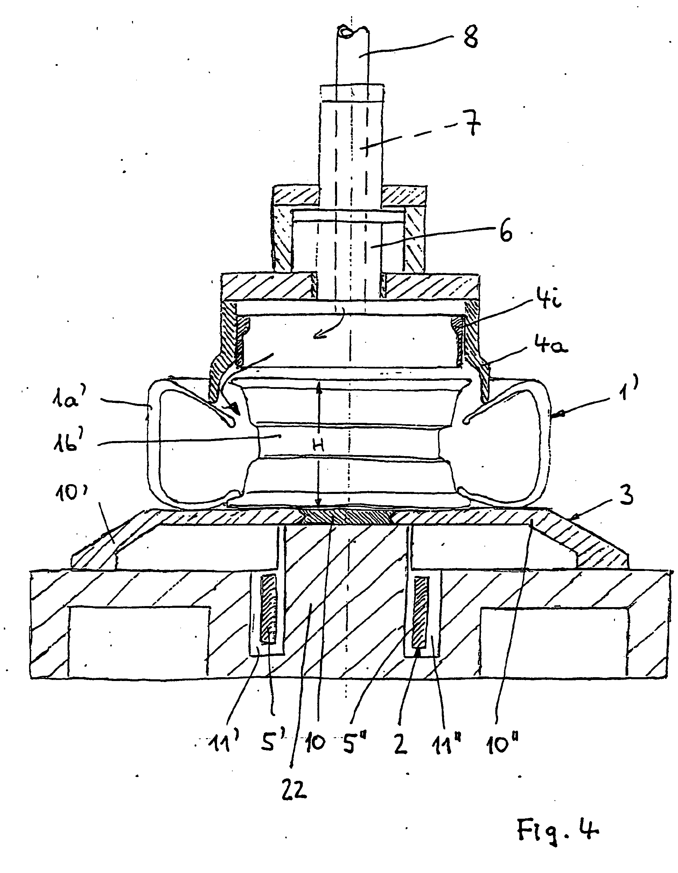

Die in Fig. 4 dargestellte Reifenfüllstation entspricht im wesentlichen der in der Fig. 2 dargestellten Reifenfüllstation. In der Darstellung nach Fig. 2 ist jedoch nur das zentrale Teil 10 der Lager und Dichteinrichtung 3 an dem säulenförmigen Teil 22 des Maschinengestells 9 abgestützt. Die beiden seitlichen Teile 10', 10" der Lager- und Dichteinrichtung 3 sind jeweils an den außenliegenden Bereichen des Maschinengestells 9 abgestützt. Die Abstützung an den äußeren Bereichen der Teile 10' und 10" ist in vielen Fällen ausreichend, zumal eine Abstützung auch noch über die Anordnung der Dichtlippen zwischen zentralem Teil 10 und äußeren Teilen 10' und 10" vorliegt. Bei großer Krafteinwirkung z.B. großen Druckkräften bei der Füllung größerer Reifen ist eine zusätzliche Abstützung der inneren Bereiche der seitlichen Teile 10' und 10" der Lager- und Dichteinrichtung 3 vorteilhaft.

Im Hinblick darauf ist bei der in der Fig. 4 dargestellten Ausführungsform das zentrale Teil 10 der Lager- und Dichteinrichtung 3 schmaler ausgebildet und die seitlichen Teile 10' und 10" gelangen mit ihren Dichtkanten näher zur zentralen Achse und liegen bei dichtend aneinander anliegenden Teilen 10, 10', 10" abgestützt auf dem säulenförmigen Teil 22 des Maschinengestells 9 auf. Das Verschieben der seitlichen Teile 10', 10" erfolgt in lastfreiem Zustand ohne aufwendige Führungselemente und beim Füllvorgang sind die Teile 10' und 10" an einer stabilen Stützstruktur, nämlich dem säulenförmigen Teil 22 des Maschinengestells 9, abgestützt.

Bei allen dargestellten Ausgestaltungen kann in der Übersichtlichkeit halber nicht dargestellter Weise das zentrale Teil der Lager- und Dichteinrichtung einen Zentrieransatz aufweisen, der mit einer Öffnung in der Radfelge zwecks zentrierter Aufnahme der Rad/Reifenanordnung auf der Lager- und Dichteinrichtung zusammenwirkt.

Der zentrale Teil der Lager- und Dichteinrichtung kann in nicht dargestellter Weise einen Vorsprung aufweisen, der sich in den gegenüberliegenden Felgeninnenraum erstreckt und diesen zu einem großen Teil ausfüllt. Der Vorsprung kann am zentralen Teil ausgeformt sein, es kann aber auch ein Formstück an dem zentralen Teil angeordnet sein. Eine derartige Ausgestaltung verringert das Füllvolumen, da ein Teil des beim Füllvorgang abgedichteten Gesamtraums durch den Vorsprung ausgefüllt wird und dieses Volumen nicht mit Druckluft gefüllt wird. Deshalb wird der Totraum, d.h der nicht vom Reifen umschlossene, restliche abgedichtete Raum, verringert. Der Vorsprung kann auch einen Zentrieransatz zwecks zentrierter Aufnahme der Rad/Reifenanordnung aufweisen.

## Patentansprüche

1. Reifenfüllstation, der aus einer Radfelge (1b, 1 b') und einem auf die Radfelge (1 b, 1 b') montierten Reifen (1 a, 1a') bestehende Rad/Reifenanordnungen (1, 1') über eine Transporteinrichtung (2) zuführbar sind, mit einer Reifenfüllglocke (4), die mit einer Seitenfläche des Reifens (1a, 1a') zusammenwirkt, mit einer mit der gegenüberliegenden Seitenfläche der Rad/Reifenanordnung (1, 1') zusammenwirkenden Dichtfläche einer Lager- und Dichteinrichtung (3) und mit einer Einrichtung mittels der Rad/Reifenanordnung (1, 1') und Transporteinrichtung (2) quer zur Transportebene relativ zueinander bewegbar sind, **dadurch gekennzeichnet, daß** die Dichtfläche der Lager- und Dichteinrichtung (3) aus wenigstens zwei Teilen zusammengesetzt ist, die für den Reifenfüllvorgang dichtend aneinander anlegbar und für die Transportphasen der Rad/Reifenanordnungen (1, 1') auseinander bewegbar sind.

2. Reifenfüllstation nach Anspruch 1, **dadurch gekennzeichnet, daß** die Transporteinrichtung (2) zwei beiderseits der Radmitte angeordnete Transportmittel (5', 5") zur Abstützung der Rad/Reifenanordnung (1, 1') aufweist und daß die Auflageplatte zumindest ein zentrales, zwischen den Transportmitteln (5', 5") angeordnetes Teil (10) aufweist sowie zumindest ein Teil, das seitlich an das zentrale Teil (10) dichtend anlegbar ist.

3. Reifenfüllstation nach Anspruch 1 oder Anspruch 2, **dadurch gekennzeichnet, daß** das seitlich anlegbare Teil aus einer Stellung zwischen den Transportmitteln (5', 5") in die Anlagestellung bewegbar ist.

4. Reifenfüllstation nach Anspruch 1 oder Anspruch 2, **dadurch gekennzeichnet, daß** vorzugsweise zwei weitere Teile (10', 10") seitlich neben den Transportmitteln (5', 5") angeordnet sind und quer zur Transportrichtung in die Anlagestellung bewegbar sind.

5. Reifenfüllstation nach einem oder mehreren der vorhergehenden Ansprüche,
**dadurch gekennzeichnet, daß** die Transporteinrichtung (2) gegenüber dem zentralen Teil (10) der Auflageplatte und der Rad/Reifenanordnung (1.1') verschiebbar ist.

6. Reifenfüllstation nach einem oder mehreren der vorhergehenden Ansprüche,
**dadurch gekennzeichnet, daß** das zentrale Teil (10) der Auflageplatte zusammen mit der Rad/Reifenanordnung (1, 1') gegenüber der Transporteinrichtung (2) verschiebbar ist.

7. Reifenfüllstation nach einem oder mehreren der vorhergehenden Ansprüche,
**dadurch gekennzeichnet, daß** die Anlageflächen der Auflageplatte Dichtvorrichtungen wie Dichtlippen aufweisen.

8. Reifenfüllstation nach einem oder mehreren der vorhergehenen Ansprüche,
**dadurch gekennzeichnet, daß** ein das zentrale Teil (10) der Auflageplatte abstützendes Gestellelement der Reifenfüllstation vorgesehen ist, gegen das auch das zumindest eine gegen das zentrale Teil dichtend angelegte Teil abgestützt ist.

9. Reifenfüllstation nach einem oder mehreren der vorhergehenden Ansprüche,
**dadurch gekennzeichnet, daß** die Reifenfüllglocke (4) zumindest zwei Füllringe (4a, 4i) unterschiedlichen Durchmessers aufweist.

10. Reifenfüllstation nach Anspruch 9, **dadurch gekennzeichnet, daß** die Druckluftzufuhr über eine innerhalb des innersten Füllrings (4i) liegende Öffnung in den Innenraum der Reifenfüllglocke (4) erfolgt.

11. Reifenfüllstation nach Anspruch 9 oder Anspruch 10, **dadurch gekennzeichnet, daß** die Füllringe (4a, 4i) konzentrisch angeordnet und gegeneinander in Achsrichtung verschiebbar sind.

12. Reifenfüllstation nach einem oder mehreren der vorhergehenden Ansprüche, **dadurch gekennzeichnet, daß** die Drehachse der Rad/Reifenanordnung (1, 1') vertikal liegt.

13. Reifenfüllstation nach einem oder mehreren der vorhergehenden Ansprüche, **dadurch gekennzeichnet, daß** die Reifenfüllstation Teil eines Reifenmontagesystems und/oder einer Räderauswuchtanlage mit die Transporteinrichtung portalartig umgebenden Meß- und/oder Bearbeitungsstationen ist.

14. Verfahren zur Reifenfüllung eines auf einer Radfelge (1b, 1b') montierten Reifens (1a, 1a') in einer Reifenfüllstation, bei dem die Rad/Reifenanordnung (1,1') von einer Transporteinrichtung (2) in die Reifenfüllstation transportiert und dort gelagert wird, mittels einer Reifenfüllglocke (4) an einer Seitenfläche ein ringförmiger Zugang zwischen Reifen (1a, 1a') und Radfelge (1b, 1b') zur Füllung des Reifens (1a, 1a') mit Druckluft hergestellt und die andere Seitenfläche an einer Dichtfläche abgedichtet wird, die Druckluftfüllung erfolgt und die Rad/Reifenanordnung (1,1`) danach von der Transporteinrichtung (2) aufgenommen und weitertransportiert wird, **dadurch gekennzeichnet, daß** nach Lagerung der Rad/Reifeneinheit (1,1') die Transporteinrichtung (2) und die Rad/Reifenanordnung (1,1') senkrecht zur Transportebene voneinander wegbewegt werden, nach der Wegbewegung mehrere Dichtflächen zu der einen Dichtfläche zusammengefügt werden und nach erfolgter Reifenfüllung die Dichtflächen getrennt und Transporteinrichtung (2) und Rad/Reifenanordnung (1, 1') zum Weitertransport wieder in Kontakt gebracht werden.

15. Verfahren nach Anspruch 14, **dadurch gekennzeichnet, daß** bei der Wegbewegung die Transporteinrichtung (2) abgesenkt wird und Dichtflächen über die ursprüngliche Bewegungsbahn der Transporteinrichtung (2) hinweg bis zur dichtenden Anlage verschoben werden.

16. Verfahren nach Anspruch 14, **dadurch gekennzeichnet, daß** bei der Wegbewegung die Rad/Reifenanordnung (1, 1') über die Bewegungsbahn der Transporteinrichtung (2) angehoben wird und in dieser Höhe angeordnete Dichtflächen bis zur dichtenden Anlage verschoben werden.

17. Verfahren nach Anspruch 14, **dadurch gekennzeichnet, daß** ein Füllring einer mehrere Füllringe (4, 4i) aufweisenden Füllglocke (4) entsprechend dem Reifendurchmesser zum Einsatz ausgewählt wird.

## Claims

1. Tyre filling station, to which wheel/tyre arrangements (1, 1') comprising a wheel rim (1b, 1b') and a tyre (1a, 1a') fitted onto the wheel rim (1b, 1b') are feedable by means of a conveying device (2), having a tyre filling bell (4) that interacts with one lateral surface of the tyre (1a, 1a'), having a sealing surface of a bearing- and sealing device (3) that interacts with the opposite lateral surface of the wheel/tyre arrangement (1, 1'), and having a device, by means of which wheel/tyre arrangement (1, 1') and conveying device (2) are movable transversely of the conveying plane relative to one another, **characterised in that** the sealing surface of the bearing- and sealing device (3) is composed of at least two parts, which for the tyre filling operation may be brought into sealing mutual abutment and for the conveying phases of the wheel/tyre arrangements (1, 1') may be moved apart from one another.

2. Tyre filling station according to claim 1, **characterised in that** the conveying device (2) comprises two conveying means (5', 5") disposed on either side of the wheel centre for supporting the wheel/tyre arrangement (1, 1') and that the supporting plate comprises at least one central part (10) disposed between the conveying means (5', 5") as well as at least one part that is positionable in a sealing manner laterally against the central part (10).

3. Tyre filling station according to claim 1 or claim 2, **characterised in that** the laterally positionable part is movable from a position between the conveying means (5', 5") into the applied position.

4. Tyre filling station according to claim 1 or claim 2, **characterised in that** preferably two further parts (10', 10") are disposed laterally alongside the conveying means (5', 5") and are movable transversely of the conveying direction into the applied position.

5. Tyre filling station according to one or more of the preceding claims, **characterised in that** the conveying device (2) is displaceable relative to the central part (10) of the supporting plate and the wheel/tyre arrangement (1, 1').

6. Tyre filling station according to one or more of the preceding claims, **characterised in that** the central part (10) of the supporting plate together with the wheel/tyre arrangement (1, 1') is displaceable relative to the conveying device (2).

7. Tyre filling station according to one or more of the preceding claims, **characterised in that** the locating faces of the supporting plate have sealing devices such as sealing lips.

8. Tyre filling station according to one or more of the preceding claims, **characterised in that** a frame element of the tyre filling station that supports the central part (10) of the supporting plate is provided, against which the at least one part applied sealingly against the central part is also supported.

9. Tyre filling station according to one or more of the preceding claims, **characterised in that** the tyre filling bell (4) comprises at least two filling rings (4a, 4i) of differing diameter.

10. Tyre filling station according to claim 9, **characterised in that** the compressed air is supplied through an opening, which is situated inside the innermost filling ring (4i), into the interior of the tyre filling bell (4).

11. Tyre filling station according to claim 9 or claim 10, **characterised in that** the filling rings (4a, 4i) are disposed concentrically and are mutually displaceable in axial direction.

12. Tyre filling station according to one or more of the preceding claims, **characterised in that** the axis of rotation of the wheel/tyre arrangement (1, 1') is situated vertically.

13. Tyre filling station according to one or more of the preceding claims, **characterised in that** the tyre filling station is part of a tyre assembly system and/or of a wheel balancing installation having measuring and/or processing stations, which surround the conveying device in a portal-like manner.

14. Method of filling a tyre (1a, 1a') fitted on a wheel rim (1b, 1b') in a tyre filling station, whereby the wheel/tyre arrangement (1, 1') is conveyed by a conveying device (2) into the tyre filling station and mounted there, by means of a tyre filling bell (4) at one lateral surface an annular access is produced between tyre (1a, 1a') and wheel rim (1b, 1b') for filling the tyre (1a, 1a') with compressed air and the other lateral surface is sealed off at a sealing surface, the introduction of compressed air is effected and the wheel/tyre arrangement (1, 1') is then picked up and conveyed further by the conveying device (2), **characterised in that** after mounting of the wheel/tyre unit (1,1') the conveying device (2) and the wheel/tyre arrangement (1, 1') are moved apart from one another at right angles to the conveying plane, after the moving-apart a plurality of sealing surfaces are joined together to form the one sealing surface, and after inflation of the tyre the sealing surfaces are separated and conveying device (2) and wheel/tyre arrangement (1, 1') are brought into renewed contact for further conveying.

15. Method according to claim 14, **characterised in that**, during the moving-apart, the conveying device (2) is lowered and sealing surfaces are displaced across the original path of motion of the conveying device (2) up to sealing abutment.

16. Method according to claim 14, **characterised in that**, during the moving-apart, the wheel/tyre arrangement (1, 1') is lifted above the path of motion of the conveying device (2) and sealing surfaces disposed at this height are displaced up to sealing abutment.

17. Method according to claim 14, **characterised in that** in accordance with the tyre diameter one filling ring of a filling bell (4) comprising a plurality of filling rings (4a, 4i) is selected for use.

## Revendications

1. Station de gonflage de pneus à laquelle peuvent être amenés, par l'intermédiaire d'un dispositif de transport (2), des dispositifs roue/pneu (1, 1') constitués d'une jante de roue (1b, 1 b') et d'un pneu (1 a, 1 a') monté sur la jante de roue (1b, b'), avec une cloche de gonflage de pneu (4) qui coopère avec une surface latérale du pneu (1a, 1a'), avec une surface d'étanchéité d'un dispositif de stockage et d'étanchéité (3), laquelle surface d'étanchéité coopère avec la face latérale opposée du dispositif roue/pneu (1, 1'), et avec un dispositif avec lequel le dispositif roue/pneu (1, 1') et de dispositif de transport (2) peuvent être déplacés l'un par rapport à l'autre perpendiculairement au plan de transport, **caractérisée en ce que** la surface d'étanchéité du dispositif de stockage et d'étanchéité (3) est composée d'au moins deux pièces pouvant, pour le procédé de gonflage de pneus, être appuyées l'une contre l'autre en assurant l'étanchéité et pouvant, pour les phases de transport des dispositifs roue/pneu (1, 1'), être écartées l'une de l'autre.

2. Station de gonflage de pneus selon la revendication 1, **caractérisée en ce que** le dispositif de transport (2) est muni pour supporter le dispositif roue/pneu (1, 1') de deux moyens de transport (5', 5") disposés des deux côtés du centre de la roue, et **en ce que** la plaque d'appui est munie d'au moins une pièce (10) centrale disposée entre les moyens de transport (5', 5"), ainsi que d'au moins une pièce qui peut s'appuyer latéralement de façon étanche sur la pièce centrale (10).

3. Station de gonflage de pneus selon la revendication 1 ou 2, **caractérisée en ce que** la pièce pouvant être appuyée latéralement peut se déplacer d'une position située entre les moyens de transport (5', 5") dans une position d'appui.

4. Station de gonflage de pneus selon la revendication 1 ou 2, **caractérisée en ce que** de préférence deux pièces supplémentaires (10', 10") sont disposées latéralement à côté des moyens de transport (5', 5") et qui peuvent être déplacées dans la position d'appui perpendiculairement à la direction de transport.

5. Station de gonflage de pneus selon l'une des revendications précédentes, **caractérisée en ce que** le dispositif de transport (2) peut être déplacé par rapport à la pièce centrale (10) de la plaque d'appui et au dispositif roue/pneu (1, 1').

6. Station de gonflage de pneus selon l'une ou plusieurs de revendications précédentes, **caractérisée en ce que** la pièce centrale (10) de la plaque d'appui peut être déplacée en même temps que le dispositif roue/pneu (1, 1') par rapport au dispositif de transport (2).

7. Station de gonflage de pneus selon l'une ou plusieurs de revendications précédentes, **caractérisée en ce que** les surfaces d'appui de la plaque d'appui sont munies de dispositifs d'étanchéités, tels que des lèvres d'étanchéité.

8. Station de gonflage de pneus selon l'une ou plusieurs de revendications précédentes, **caractérisée en ce qu'**il est prévu un élément de bâti de la station de gonflage de pneus supportant la partie centrale (10) de la plaque d'appui, contre lequel élément s'appuie également la au moins une pièce pouvant s'appuyer de façon étanche contre la pièce centrale (10).

9. Station de gonflage de pneus selon l'une ou plusieurs de revendications précédentes, **caractérisée en ce que** la cloche de gonflage de pneu (4) est munie d'au moins deux anneaux de gonflage (4a, 4i) de diamètre différents.

10. Station de gonflage de pneus selon la revendication 9, **caractérisée en ce que** l'apport de pression dans la chambre interne de la cloche de gonflage de pneus étant réalisé par une ouverture située à l'intérieur de l'anneau le plus au centre (4i).

11. Station de gonflage de pneus selon la revendication 9 ou 10, **caractérisée en ce que** les anneaux de gonflage (4a, 4i) sont disposés concentriquement et de sorte à pouvoir coulisser l'un par rapport à l'autre en direction axiale.

12. Station de gonflage de pneus selon l'une ou plusieurs de revendications précédentes, **caractérisée en ce que** l'axe de rotation du dispositif roue/pneu (1, 1') est vertical.

13. Station de gonflage de pneus selon l'une ou plusieurs de revendications précédentes, **caractérisée en ce que** la station de gonflage de pneus fait partie d'un système de montage de pneus et/ou d'une installation d'équilibrage de roues avec des stations de mesure ou de traitement entourant à la façon d'un portail le dispositif de transport.

14. Procédé pour le gonflage de pneus d'un pneu (1a, 1a') monté sur une jante de roue (1b, 1b') dans une station de gonflage de pneus, selon lequel le dispositif roue/pneu (1, 1') est transporté par un dispositif de transport (2) dans la station de gonflage de pneus et logé dedans de telle sorte qu'il se forme à l'aide d'une cloche de gonflage (4) sur une surface latérale un accès annulaire entre le pneu (1a, 1a') et la jante de roue (1b, 1b') pour le gonflage du pneu (1a, 1a') avec de l'air comprimé et que l'autre surface latérale est rendue étanche au moyen d'une surface d'étanchéité, le remplissage d'air comprimé est réalisé et le dispositif roue/pneu (1, 1') est ensuite reçu par le dispositif de transport (2) qui continue à le transporter, **caractérisé en ce qu'**après le stockage de l'unité roue/pneu (1, 1'), le dispositif de transport (2) et le dispositif roue/pneu (1, 1') peuvent être déplacés en s'éloignant l'un par rapport à l'autre perpendiculairement au plan de transport, après le déplacement d'écartement plusieurs surfaces d'étanchéité sont assemblées pour former le seul surface d'étanchéité, et après le gonflage du pneu les surfaces d'étanchéité sont séparées et le dispositif de transport (2) et le dispositif roue/pneu (1, 1') sont remis en contact pour la suite du transport.

15. Procédé selon la revendication 14, **caractérisé en ce que** lors du déplacement d'écartement, le dispositif de transport (2) est abaissé et les surfaces d'étanchéité sont poussées au-delà de la trajectoire de déplacement initiale du dispositif de transport (2) jusqu'à former un ensemble assurant l'étanchéité.

16. Procédé selon la revendication 14, **caractérisé en ce que** lors du déplacement d'écartement, le dispositif roue/pneu (1, 1') est soulevé au-dessus de la trajectoire de déplacement du dispositif de transport (2) et des surfaces d'étanchéité disposées à cette hauteur sont poussées jusqu'à former un ensemble assurant l'étanchéité.

17. Procédé selon la revendication 14, **caractérisé en ce qu'**un anneau de gonflage d'une cloche de gonflage munie de plusieurs anneaux de gonflage (4, 4i) est choisi en fonction du diamètre du pneu.
